# EUROPEAN PATENT APPLICATION

(11) **EP 3 357 823 A1**
(43) Date of publication of application: **08.08.2018**
(21) Application number: 18152760.7
(22) Date of filing: 22.01.2018
(51) Int. Cl.: B65D 1/34

(54) **AN INNOVATIVE TRAY OF BIODEGRADABLE TYPE FOR CARRYING FINDINGS AND DELICATE OBJECTS**

(30) Priority: 01.02.2017 IT 201700010753
(71) Applicant: Metalplus S.p.A, 50038 Scarperia e San Piero (FI) (IT)
(72) Inventor: FALORNI, Federico, 50012 Bagno a Ripoli (IT); FRASSINE, Roberto, 25128 Brescia (IT); MARCHESI, Maria Chiara, 20090 Vimodrone (IT)
(74) Representative: Emmi, Mario

(57) **Abstract**

The present invention concerns a method for the realization of a tray for carrying delicate objects and comprising the steps of:
- Arrangement of a layer forming the body of the tray of PLA material;
- Arrangement of a layer of nonwoven fabric of Lyocell type;
- Coupling said layer of nonwoven fabric with said layer of PLA forming the body of the tray, in such a manner as to cover at least said part of the tray for carrying objects;
- And wherein said coupling between the outer layer of nonwoven fabric of Lyocell type and the body of the tray occurs at a preset temperature, by pressing the outer layer onto the body of the tray under a preset pressure, for a preset time and subsequent cooling, in such a manner that melted parts of the body of PLA bind by solidification with fibers of nonwoven fabric.

## Description

### Technical field

The present invention concerns the technical field of supports for carrying delicate objects such as mechanical findings, small items for objects of fashion field, leather industry, etc.

In particular, the invention refers to a particular tray for the transport, which is made of an innovative material and according to a particularly favourable new process, thus being fully biodegradable, efficient and solid.

### Prior art

Delicate objects are generally carried by means of a tray in the field of mechanical findings or accessories, fashion accessories for example.

For instance, the need of carrying mechanical findings can occur during productive steps, wherein one or more items are carried from a point to another one of the chain of production (for example, from the production to the assembly chain).

Such a tray is covered by an outer cover, defined in technical jargon "flocking", which creates a protective scratch-resistant outer layer. The tray is made of a series of recesses and each recess is the slot of an item.

Flocking prevents the items from touching directly the material of the tray, generally plastic material, in such a manner as to avoid scratches and damages.

Delicate items, for instance findings of fashion accessories, are carried by such a type of trays.

An example can be the realization of trays of precious material with specific inner findings intended for luxury bags or suitcases.

The utility model FI2009U52 filed on 20/07/2009 in the name of BB STAMP S.r.l. is intended for this purpose.

Said application describes a tray for carrying delicate objects that is fully made of biodegradable material.

In particular, both the support surface, made of plastic material, with slots for containing carried objects and outer flocking are made of biodegradable material.

In this manner, the whole tray is biodegradable waste to all intents and purposes when it cannot be used anymore and has to be trashed.

However, the realization of such a type of tray has some technical inconveniences and is particularly complex.

For example, used polymer materials have to be processed in particular manner by hydrolysis, in order to make it fully biodegradable.

The outer flocking, being also selected separately as biodegradable material, has to be cut to such a size to be glued on the tray. Therefore, it requires the use of outer glues that have to be selected between the biodegradable ones, thus requiring a further step of glueing, which complicates the processing phase.

Moreover, an unsuitable glue can invalidate biodegradable features of the whole tray.

### Disclosure of the invention

It is therefore the scope of the present invention to supply a tray for carrying objects for solving the above-mentioned technical problems.

In particular, the scope of the present invention is to supply a tray which is fully biodegradable, being at the same time easily producible, with no need to use outer glues and further glueing steps.

These and other scopes are obtained through the present tray, according to claim 1.

Such a tray (1) comprises:
- A plate (2) and;
- An outer covering (3) arranged on the plate (2) for covering at least the part for carrying objects and for protecting objects from a direct contact with the plate (2) ;

According to the invention, said plate (2) is of bio-degradable material, PLA, i.e. fully biodegradable polylactic acid is preferably suggested, and the outer covering (3) is made of nonwoven fabric of biodegradable type as well, both connected each other through at least partial and/or local melting of PLA which solidifies while cooling, thus binding to the nonwoven fabric.

Therefore, by selecting a plate of biodegradable material which can be melted at certain temperatures, even only locally or in specific points, it is possible to create a firm connection with an ideal product.

Advantageously, PLA material is preferred. In particular, fibers of nonwoven material are soaked even only locally or partially by melted PLA, thus binding with nonwoven fabric.

In this manner, all the prearranged technical advantages are obtained.

In particular, a perfectly biodegradable tray is obtained in simple and cheap manner by means of a single step.

All the above-mentioned materials are indeed biodegradable.

Moreover, the described process allows to obtain a perfect adherence between the layer of PLA and nonwoven fabric with no need to use glue.

In particular, the final product is formed by two layers strongly bound each other, thus producing:
- More toughness;
- Better superficiality which means more closeness and softness. By means of such a tray, there is less risk to damage the item with respect to trays currently in use;
- Embellishment, as it is possible to apply all the typical processing of the textile field (customization, application of textures, reinforcements, etc.) by means of fabric.

Advantageously, a particular nonwoven fabric which proved to be suitable for the purposes, i.e. biodegradable and perfectly treatable according to the described method, is for example of Lyocell type, which is a suggested material.

### Brief description of drawings

Further features and advantages of the present tray, according to the invention, will become apparent from the following description of preferred embodiments thereof, given only by way of non-limiting, indicative, example, with reference to the accompanying drawings, wherein:
- Figure 1 depicts in outline form a coupling of the outer biodegradable nonwoven covering (nonwoven fabric) on the plate or thin sheet of PLA;
- Figure 2 outlines a productive step wherein the plate is coupled to nonwoven fabric in an environment with controlled temperature (for instance, an oven) and coupling the two parts under pressure for a preset period, for example by means of a press (20, 21);
- Figure 3 outlines the layers of the final product obtained, while figure 4 is an enlarged part of such layers.
- Figures from 5 to 7 specify in more details the three possible productive methods.

### Description of some preferred embodiments

The following figures describe some preferred embodiments of the invention.

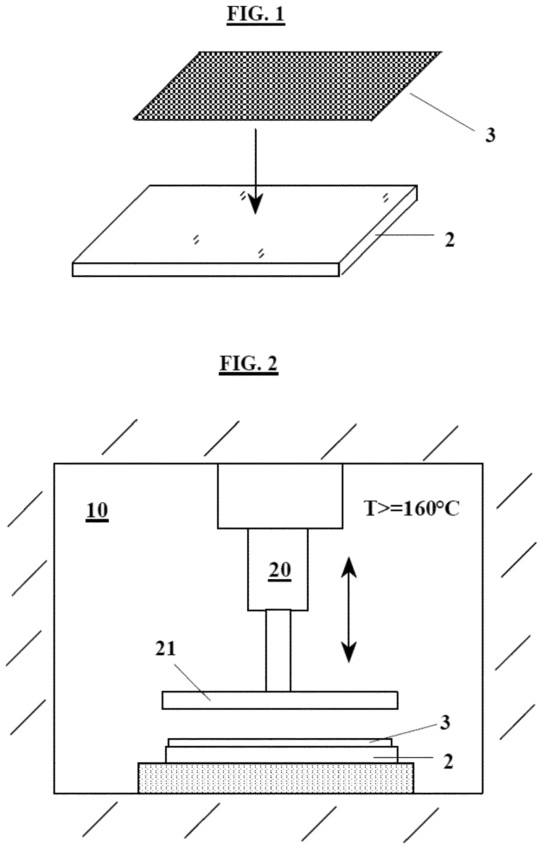

With reference to figure 1, the invention consists of coupling two different types of material, i.e. PLA with nonwoven fabric of Lyocell type in innovative manner.

Figure 1 outlines indeed a layer 2 of PLA (i.e. a plate 2), which will form the body of the tray on which the outer ladder 3 made of nonwoven fabric is applied.

Therefore, the layer 2 is a thin sheet which, according to the invention, is thermally bound to nonwoven fabric and then thermoformed, if it is necessary.

PLA (Polylactic Acid) is a fully biodegradable lactic acid polymer and it is well-known in the state of the art.

The production thereof can be summarized in the following steps:
- Hydrolysis;
- Fermentation;
- Purification and concentration:
- Polymerization.

For instance, a reference can be "Quaderno del Convegno-Scuola AIM" of 2012 "Summary of polymer materials".

PLA is not described further here, as it is a well-known material in the state of the art.

The nonwoven fabric of Lyocell type is a fiber produced by crushed cellulose, dissolved in NMMO (N-Methylmorpholine N-oxide).

The production of Lyocell yarn can be summarized in the following steps:
- Arrangement of wood paste;
- Dilution in N-Methylmorpholine N-oxide;
- Filtration;
- Spinning;
- Washing, bleaching and drying.

N-Methylmorpholine N-oxide can be fully recycled during the production process.

For this purpose, a reference can be "Textile technology" by Burkhard Wulfhorst (2001).

Lyocell is a fully biodegradable nonwoven fabric with such features as to make it suitable for coupling with PLA and for protective purpose.

A type of Lyocell, named "Tencell", that can be used can be found on the following website:
http://www.lenzing-fibers.com/en/home/

The material named "Modal", which is also usable, can be found on the same website.

Both "Tencel" and "Modal" are trademarks which clearly indicate the type of known product on the market that can be used for the present invention, i.e. two types of Lyocell.

According to the invention, the productive process of the tray includes the binding of the plate of PLA with such a type of nonwoven fabric Lyocell (Tencel or Modal), according to the following steps.

Generally, the density of PLA varies in technical literature, from approximately 1,24 1.24 g/cm^3 to approximately 1.26 g/cm^3, but the selected one according to the preferred embodiment of the invention is preferably 1,25g/cm^3.

Thus, good mechanical strength, great adhesion and malleability between PLA and the outer covering layer are ensured.

As explained further in the present description, the thickness of PLA plate can be comprised between 0,4 mm and 0,7 mm with a most preferred value of approximately 0,5 mm, therefore very thin as a thin sheet.

The selected nonwoven fabric Lyocell has a weight between 50 and 150 g/m², preferably 100 g/m².

The thickness is approximately comprised between 0,3 mm and 0,7 mm to balance price and stiffness features. Therefore, also nonwoven fabric is in form of a thin sheet or thin sheet.

These parameters proved to be optimal to obtain a final product with suitable mechanical features, as described further.

Generally, the invention is made up of thermally binding a PLA plate with nonwoven fabric under a preset pressure, at a certain temperature for enough time. The temperature has to make the PLA melt, at least locally, in such a manner that melted parts blend with fibres of nonwoven fabric, which is pressed onto it and such that, a single piece is obtained after cooling.

As outlined in figure 2, it can occur for instance inside an oven 10, by arranging the PLA layer onto nonwoven fabric. A press 20 is activated onto the two overlapping layers of PLA and nonwoven fabric, in such a manner as to keep such a pressure to ensure a good touch between the parts.

Pressure ensures that, while the melting (even locally) of PLA, nonwoven fabric fibres soak in melted material, which is then bound to PLA layer, while solidifying.

As the process has ended, the obtained layer is made cool by means of natural air or also by means of forced-air system.

The quality of nonwoven layer is not altered, even if the temperature used to melt is over 160°C, as the oxygen amount used is reduced by the press itself, or by the contact surface which lays and pushes onto the fabric, thus minimizing oxidation risks.

Experimentations proved that the product quality remains optimal.

According to such a process, the two materials melt, in such a manner as to obtain a single and well merged product, which has not only the advantage of being fully biodegradable but also does not require the use of outer glue, even ensuring a strong holding.

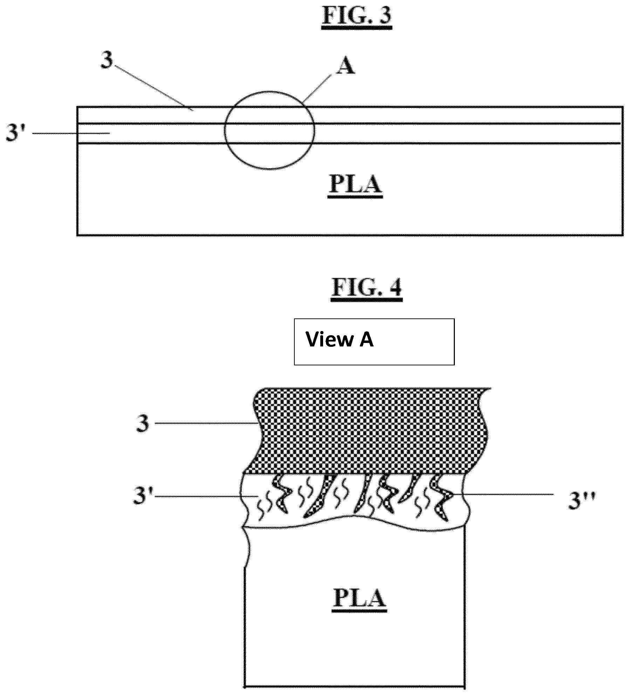

Such a productive process creates three layers melted each other, outlined in figure 3 and figure 4.

A first layer is the basic material PLA.

The intermediate layer (3', 3") is made of PLA, perfectly sticking to Lyocell fibres, thus creating a single element.

The outer layer has a full superficial finish and is made of nonwoven fabric Lyocell.

By describing the invention in more details, three possible productive processes can be determined, all of them basing on the above-mentioned principle of pressing the two layers each other at a preset temperature, in such a manner that PLA melts at least locally for binding with nonwoven fabric fibres while cooling.

First of all, as described at the beginning of the present description, the process for obtaining the tray can be divided into two different and consecutive steps:
1) The coupling of the plate made of the coupling between PLA and nonwoven fabric occurs in the first step;
2) Then, such a plate can be thermally formed in order to obtain recesses (i.e. the finished tray) and wherein each recess is the slot for the piece to be carried, as per the state of art.

In general, the temperature for thermoforming is lower than the temperature for coupling the two components (PLA and nonwoven fabric), as thermoforming does not entail the melting of material but it only allows the deformation thereof.

However, thermoforming is not necessary for the invention, as trays which do not include such recesses could be produced.

Moreover, thermoforming process could in theory occur in the previous step, if a suitably shaped pressing system is used while coupling PLA and nonwoven fabric.

Provided that, with reference to the previous step of coupling said PLA plate and nonwoven fabric sheet, three different possible modes of operating, two discontinuous ones and a continuous one, can occur.

Generally, discontinuous processes will allow to obtain single plates with such a size suitable to be processed, but not too quickly; on the contrary, the continuous process allows to obtain a roll, with a possible infinite length, of coupled material in a short time.

The coupling occurs at room temperature: therefore, depending on PLA used, i.e. the melting point thereof, such temperatures described further will necessary vary according to contact duration.

Subsequently furnished values proved to be valid, but, as already mentioned, the skilled person would adapt temperature ranges and times depending on specific features of the selected plate and nonwoven fabric.

Generally, the two discontinuous processes provide for a warm climatic chamber and pressure application or the use of a warm press.

On the contrary, the continuous process provides for the use of calendering.

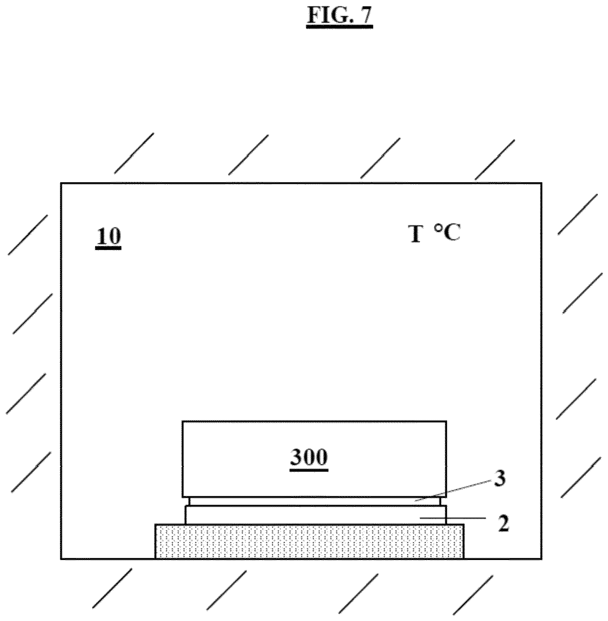

The process steps in the warm climatic chamber with pressure application are as follows:
It is necessary a climatic chamber of suitable sizes, i.e. containing plates of such sizes to be subsequently thermoformed and reaching the temperature 250°C approximately (see figure 7). Moreover, a stiff support plate will be necessary (i.e. a support base) and a plate 300 of such a size to ensure the required pressure (i.e. a sort of static press).

The process provides for the heating of the climatic chamber to 210°C approximately;
Plates of PLA thin sheet 2 and nonwoven fabric 3 of suitable sizes are arranged and the plate of thin sheet and fabric are overlapped each other and placed onto the support plate (preferably sprayed with detaching material, as those ones commonly sold). The metallic plate 300 of suitable weight, depending on the required pressure, is placed onto it.

As the chamber reaches the preset temperature, the whole assembly, comprising the support plate, the PLA plate with nonwoven fabric and the above plate 300 acting as weight, is inserted into it. The assembly is removed from the chamber after 15 minutes. The whole assembly has to cool to room temperature until it has fully solidified. Alternatively, the whole chamber can be cooled by means of a forced-air system or the assembly can be moved to a chamber for quicker cooling.

Eventually, the plate above is removed and the semifinished product, which can be further processed again by means of thermoforming at lower temperature not to cause PLA melt, in order to shape it in the required manner, is removed. 15 minutes time proved to be enough for binding a plate with 250 x 250 mm sizes with a supposable temperature over 170°C on PLA surface, as the materials have bound.

According to such a method, temperature ranges from 180°C to 250°C are preferred, preferably 210°C. The suggested pressure has to be comprised between 1 and 1,5 kPa with a stay time under pressure at such a temperature between 5 and 25 minutes, preferably 15 minutes.

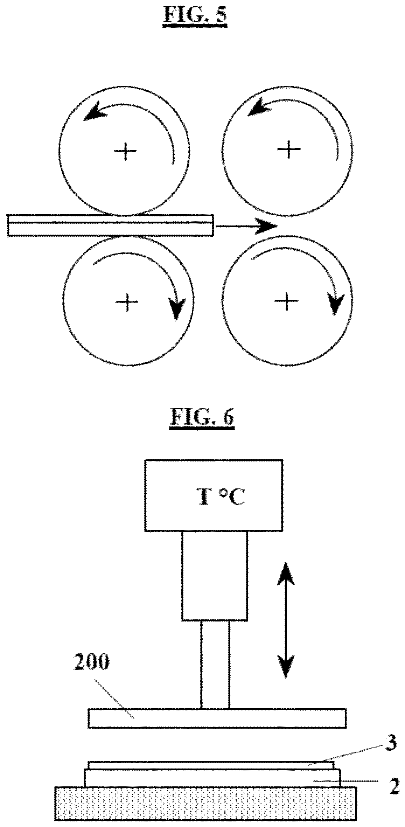

The second warm press method is outlined in figure 6. Therefore, in that case, it is necessary a press 200 of suitable sizes, i.e. containing plates of necessary sizes for the subsequent thermoforming, thus reaching at least 180°C - 200°C and enough pressure for the purpose. Therefore, the press will be equipped with known heating systems which allow it to reach required temperatures. Pressure conditions can be similar to the above-described process but they take generally less time.

According to the process, the press is heated to 180°C; Plates of thin sheet and fabric of suitable size are arranged and placed onto an even very thin stiff support overlapping each other (sprayed with detaching material). Another very thin plate can be placed onto them. As the press reaches the preset temperature, the prepared assembly is inserted into it, and it is pushed by the warm press. After few minutes (a range from 30 seconds to 5 minutes) the assembly is removed from the chamber and let it cool.

In this case too, cooling at room temperature until full solidification can occur by means of natural air or by means of forced-air system, inside or outside the chamber.

According to such a method, the following operating parameters proved to be optimal:
- Temperature: 160 to 200 ° C, preferably 180 ° C;
- Pressure: 1 to 1.5 kPa;
- Time: from 30 seconds to 5 minutes, preferably 2 min.

The advantage of this embodiment is to require much shorter times.

The third possible embodiment provides for calendering, as outlined in figure 5.

It is necessary a calender of suitable sizes, formed by one or more couples of counterrotating rollers. The assembly passes through the counterrotating rollers which press it.

Rollers are preferably of heatable type and can be placed in a heated environment.

Operating temperatures are approximately 250°C under enough pressure. A calender could be provided with rollers heated to different temperatures, in order to avoid distortions of the plate. The warmest rollers have to touch nonwoven fabric, as melting of PLA occurs only on one side and not on both sides. It will be necessary to arrange also cooling rollers for stabilizing the plate.

Figure 5 depicts a sequence of calendering rollers (two or more than two each other in sequence) through which the assembly plate of PLA and nonwoven fabric passes on rollers each other in sequence.

According to the process, cold feeding of the plate and fabric are arranged. Then, parameters of the process are set: feed rate, temperature of rollers and touch pressure. Suitable settings are made in order to ensure the adhesion of nonwoven fabric and flatness of the plate and production is started by letting the assembly pass through the calendering rollers.

In that case, the following parameters are suitable:
- Temperature from 160 to 200 °C, preferably 180 °C;
- Pressure between the rollers: from 1 kPa to 1.5 kPa;
- Feed rate: 0.1 - 2 m / min, preferably 0.2.

Such a calendering method allows to calender a continuous plate which can be cut to size at a later time.

The present invention has been described in details for coupling nonwoven fabric of Lyocell type with a plate of PLA. It could be also applied to a different biodegradable nonwoven fabric which can be applied to such a process.

The sizes in all the drawings do not depict the real proportion and are given only by way of non-limiting example. Thicknesses of the plate and nonwoven fabric are indeed even less than a millimeter and they can be compared to a thin sheet, even owning different stiffness features. Therefore, drawings enlarge such thicknesses according to untrue proportions, only for clarity purposes.

Even if the preferred embodiment of the invention describes the coupling of biodegradable nonwoven fabric of Lyocell type with a plate of PLA (meltable and biodegradable material), the invention can be intended also for thin sheets not only made of PLA but also biodegradable and suitable for being coupled with nonwoven fabric (or other biodegradable fabrics, not necessarily of nonwoven type), according to described method, for example plastic materials (i.e. thermally meltable) and biodegradable materials.

## Claims

1. A tray (1) for carrying delicate objects and comprising:
- A plate (2) ;
- An outer covering (3) arranged on the plate (2) for protecting the objects to be transported from a direct contact with the plate (2);
- **Characterized in that** said plate (2) is of bio-degradable material, preferably PLA, and the outer covering (3) is made of nonwoven fabric of biodegradable type, both connected each other through at least partial and/or local melting of the plate which solidifies while cooling thus binding to the nonwoven fabric.

2. A tray according to claim 1, wherein the nonwoven fabric is of Lyocell type, preferably of Tencel type or of Modal type.

3. A tray (1) according to claim 1, wherein in case of a plate (2) made of PLA, said plate has a selected thickness between 0.25 mm and 1mm, even more preferably between 0.4 mm and 0.7 mm, for example approximately 0.5 mm.

4. A method for the realization of a tray for carrying delicate objects and comprising the steps of:
- Arrangement of a sheet (2) of bio-degradable material, preferably of PLA material;
- Arrangement of a layer (3) of nonwoven fabric, said nonwoven fabric being of the biodegradable type, preferably of Lyocell type;
- Application of said layer of nonwoven fabric on said plate (2) ;
- Binding of said sheet (2) and the layer of nonwoven fabric;
- And wherein said binding between the layer of nonwoven fabric and said sheet (2) occurs by making the plate melt, at least locally in one or more points, and pressing the layer of nonwoven fabric on the plate for a preset of time so that melted parts of the sheet bound with the nonwoven fabric as a result of the solidification for cooling.

5. A method according to claim 4, wherein the pressing operation occurs by calendering.

6. A method according to claim 5, wherein, in case of calendering with a sheet made of PLA and a nonwoven fabric of Lyocell, the following operating parameters are provided:
- Temperature from 160 to 200 °C, preferably 180 °C;
- Pressure between the rollers: from 1 kPa to 1.5 kPa;
- Feed rate: 0.1 - 2 m / min, preferably 0.2.

7. A method according to claim 4, wherein the pressing operation occurs by means of mechanical press.

8. A method according to claim 7, wherein the mechanical press is of pre-heatable type.

9. A method according to claim 8, wherein, in case of mechanical pre-heatable press and in case of a sheet of PLA and nonwoven fabric of Lyocell, the following operating parameters are provided:
- Temperature: 160 to 200 ° C, preferably 180 ° C;
- Pressure: 1 to 1.5 kPa;
- Time: from 30 seconds to 5 minutes, preferably 2 min.

10. A method according to claim 4, wherein the pressing operation occurs by means of the application of a weight in a heated environment, preferably with a temperature range between 180 °C - 250 °C with a period under pressure to that temperature between 5 minutes and 25 minutes in case of a sheet of PLA and a nonwoven fabric of Lyocell.
